# EUROPEAN PATENT SPECIFICATION

(11) **EP 2 377 393 B1**
(45) Date of publication and mention of the grant of the patent: **10.04.2013**
(21) Application number: 11075066.8
(22) Date of filing: 13.04.2011
(51) Int. Cl.: A01K 41/06, A01K 43/00, A01K 45/00

(54) **Device for inspecting and transferring eggs and a method applied to this end**
Vorrichtung zum Überprüfen und Überführen von Eiern und Verfahren dafür
Dispositif pour transférer et contrôler d'oeufs et son procédé

(30) Priority: 15.04.2010 BE 201000242
(43) Date of publication of application: 19.10.2011
(73) Proprietor: Innovatec B.V., 4122 GE Zijderveld (NL)
(72) Inventor: Van de Loo, Philip Karel Marie-Louise, 4132 BR Vianen (NL)
(74) Representative: Donné, Eddy

(56) References cited:
- WO-A2-2008/110729
- US-A- 3 656 794
- US-B1- 6 213 709

## Description

The present invention relates to a device for inspecting and transferring eggs and a method applied to this end.

It is known that in poultry farms eggs are hatched in 'incubators'.

The fertilised eggs are thereby placed in a prehatching drawer. The positioning of the prehatching drawer in the prehatching machine enables a large number of eggs to be prehatched in a limited small space under controlled conditions.

Depending on the type of poultry, after a certain number of days the prehatching drawers are taken from the prehatching machine and the eggs then have to be placed in 'hatching trays' in order to allow sufficient space for the hatching chicks.

It is known that the prehatched eggs in the prehatching drawer are inspected so that only the eggs that contain a viable embryo are placed in a hatching tray, after which the hatching tray is placed in an incubator.

In the known methods, an inspection transfer machine is used for this whereby the eggs are inspected in the prehatching drawer. If the egg contains a viable embryo, this machine will ensure that the egg is placed in a hatching tray.

However, the percentage of eggs that are rejected in the inspection transfer machine depends on the quality of the eggs and is thus not constant.

A disadvantage of the known machines is that the filling level of the hatching tray is not always optimum.

Indeed, if many eggs are rejected in the inspection transfer machine, the hatching tray will contain relatively few eggs and the percentage of chickens per unit volume in the incubator will be low, which leads to relatively high investment costs, operating costs, labour costs and a possibly disrupted hatching process.

In order to make more optimum use of the incubators, it is known that an operator carefully places eggs in the hatching tray when this hatching tray contains relatively few eggs.

A disadvantage is that the manual placing of the eggs is very labour intensive, as this has to be done very carefully to prevent damage to the eggs.

A disadvantage attached to this is that the manually placing of the eggs does not lead to a spectacular efficiency increase as there are additional labour costs and a higher risk of damage to the eggs.

Furthermore, complex inspection transfer machines are known that make use of a controllable robot arm that can take one egg or a few eggs from a separate prehatching drawer, and can place the eggs taken in the prehatching drawer, before all eggs in the prehatching drawer are placed in the hatching tray. See e.g. document US-B-6213709.

However, a disadvantage is that this robot arm has to perform many movements if the prehatching drawer contains a low number of eggs, which of course requires a lot of time such that the capacity remains low.

Another disadvantage is that if many eggs have to be placed, the prehatched eggs stay outside the incubators for too long, which also has a negative effect on the percentage of hatched chickens.

Such a complex arrangement is also disadvantageous from an economic point of view, on account of the high investment costs that are not offset by the efficiency increase realised.

The purpose of the present invention is to provide a solution to one or more of the aforementioned disadvantages and/or other disadvantages, by providing a device for inspecting and transferring eggs from a prehatching drawer to a hatching tray, in which the device contains two conveyor belts that respectively convey prehatching drawers with prehatched eggs and empty hatching trays, whereby the device contains an inspection unit that has means to enable the prehatched eggs to be inspected, whereby the inspection unit contains a transfer unit to remove the rejected eggs from the prehatching drawer and whereby the device contains at least one egg placement module that can take all eggs out of a prehatching drawer simultaneously and can separately place one or more of the eggs taken out.

The invention also concerns a method for inspecting and transferring eggs, whereby the method comprises the steps of conveying a prehatching drawer at least partially filled with prehatched eggs to an inspection unit one by one, the inspection of the eggs for the presence and/or viability of the embryo or chicken, and the removal of the rejected eggs from the prehatching drawer, taking all eggs out of a first prehatching drawer in an egg placement module, and placing one or more of the eggs taken out in a second prehatching drawer on the first conveyor belt or in a hatching tray on the second conveyor belt.

An advantage is that each hatching tray contains the desired number of prehatched eggs, which ultimately results in the optimisation of the number of chickens hatched per hatching tray.

An advantage attached to this is that savings can be made in many areas.

Indeed because all hatching trays are optimally filled, a smaller number of incubators is sufficient to hatch the same number of chickens, or in other words the number of hatched chickens per incubator increases.

Another advantage is that fewer hatching trays are required to hatch the same number of chickens, so that cleaning costs, energy costs, labour costs and buildings can be saved. In addition the separation of chickens and waste is done more efficiently.

The device is also indirectly beneficial with regard to the ultimate percentage of hatched chickens, as the risk is very low that there will be too few eggs in the hatching tray.

Another advantage attached to the optimum filling of the hatching tray is that the hatching process is not disrupted by places that are too warm and/or too cold.

An additional advantage is that the movements that the eggs can undergo are limited, such that the risk of damage to the eggs is greatly reduced.

In the most practical embodiment the device has two egg placement modules.

An advantage is that the efficiency can be increased even more.

Indeed, if there are too few eggs in the first egg placement module to reach the desired number of eggs in the prehatching drawer or hatching tray, then eggs can be placed in the prehatching drawer or hatching tray from the second egg placement module, so that this prehatching drawer or hatching tray, after having passed along both egg placement modules, contains the desired number of eggs.

As soon as one of the two egg placement modules contains no more eggs, the egg placement module can of course be filled with approved eggs from a new prehatching drawer.

Preferably the device has a control unit that records the length of time that the eggs are in the egg placement module, which determines how many eggs must be placed there in order to aim for the desired number of eggs in the hatching tray.

In the most practical embodiment of the invention, this aforementioned desired target number of hatching eggs can be set in the hatching tray.

In a practical embodiment with a number of egg placement modules, this control unit determines from which egg placement module or modules, one or more eggs have to be taken.

An advantage is that the eggs are in the egg placement module for a limited time, and in so doing the brooding and hatching process is not disturbed or barely disturbed, which of course contributes to a high hatching percentage of chickens.

In a first embodiment, the inspection unit has a transfer module that takes all approved eggs from the prehatching drawer and puts them in a hatching tray on the second conveyor belt.

In such an embodiment, prehatching drawers with eggs are first brought to the egg placement module and the eggs must be taken from the prehatching drawer on the first conveyor belt in the egg placement module and moved to a position above the second conveyor belt. The eggs are lowered according to the signals from the control unit into a hatching tray supplied by this conveyor belt.

In another more practical embodiment, the inspected approved eggs stay in the prehatching drawer, and the eggs from the egg placement modules are placed in this prehatching tray.

In this embodiment the prehatching drawer has the desired number of eggs and all these eggs are taken by a transfer unit downstream from the egg placement modules together and placed in a hatching tray on the second conveyor belt.

In the most practical embodiment, the device has egg placement modules and an egg detection module that records the empty positions in the prehatching drawer, and reports this to the control unit and/or the egg placement modules.

An advantage is that an egg can never be placed on top of another egg, not even when a rejected egg is left behind by accident when removing the rejected eggs.

With the intention of better showing the characteristics of the invention, a preferred embodiment is described hereinafter by way of an example, without any limiting nature, of a device according to the invention, with reference to the accompanying drawings, wherein:
figure 1 schematically shows a top view of the most preferred embodiment of the device according to the invention.
figure 2 schematically shows a side view of the device of figure 1.
figure 3 shows a top view of the prehatching drawer according to the arrow F3 in figure 2.
figure 4 shows a detail of the egg placement module. figure 5 shows a variant of figure 1.
figure 6 shows a side view of the variant of figure 5.

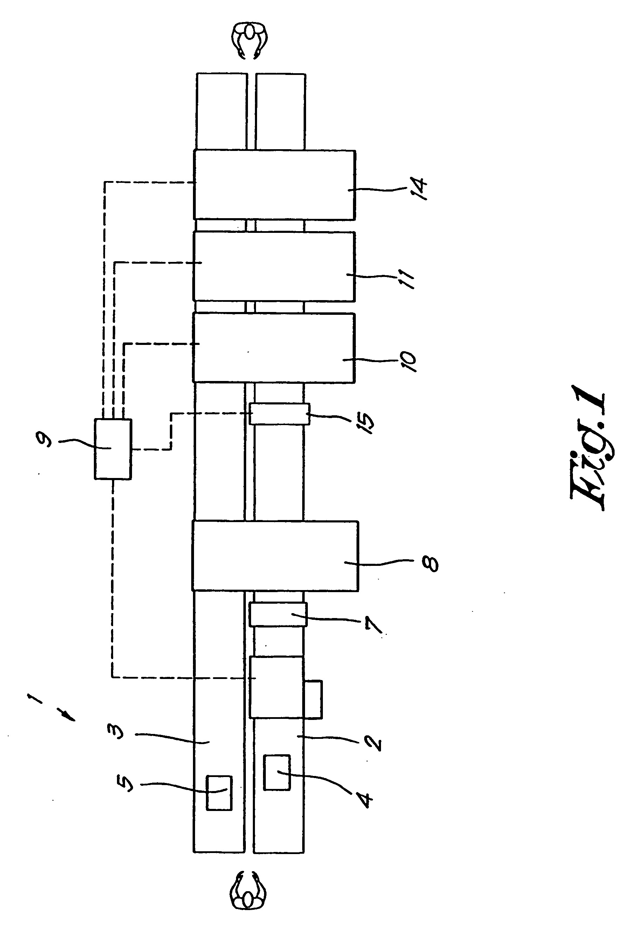

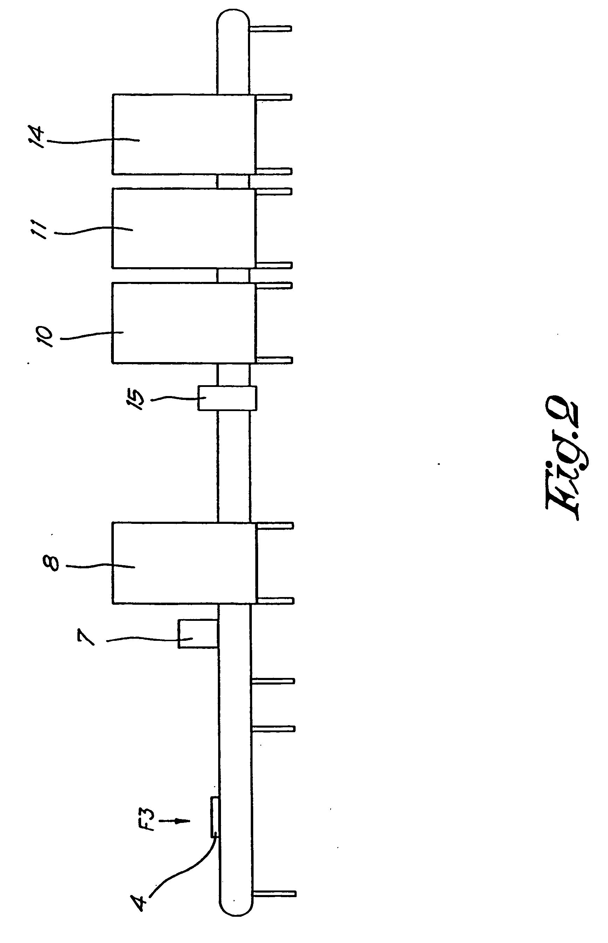

Figures 1 and 2 schematically show a device 1 for inspecting and transferring eggs that primarily consists of two conveyor belts 2-3, along which prehatching drawers 4 and hatching trays 5 respectively are transported.

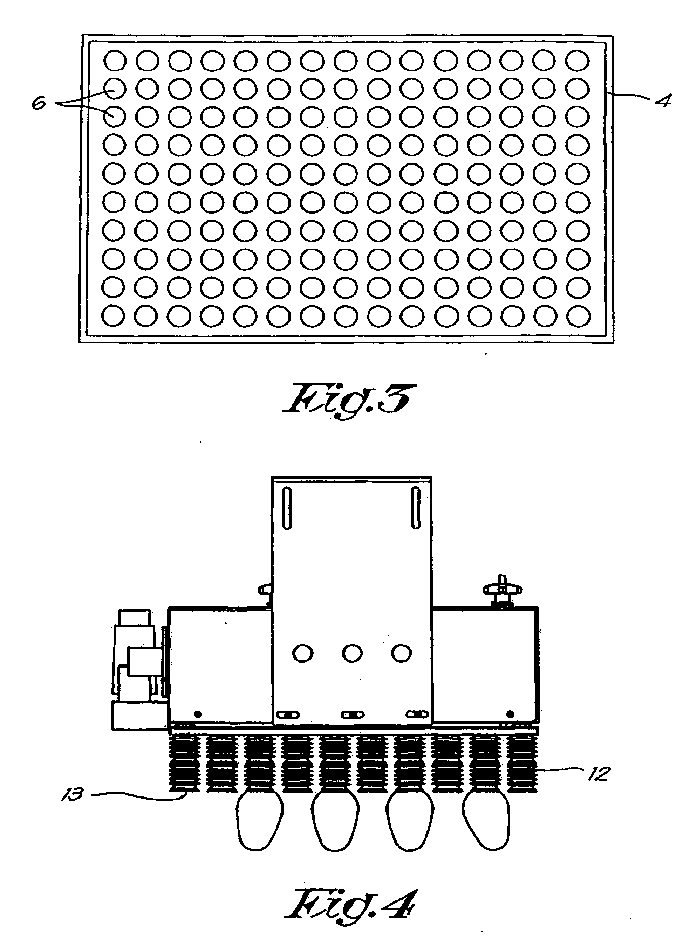

Preferably each prehatching drawer 4 has a number of individual egg holders 6 and in each one there is a prehatched egg, as illustrated in figure 3.

In the most practical embodiment, these egg holders 6 are arranged in rows and/or columns with a fixed distance between them, for example in a grid of 10 rows and 15 columns, so that the prehatching drawer 4 can in this case contain up to 150 prehatched eggs.

The device 1 according to the invention further contains an inspection unit 7 that contains means for inspecting or testing the eggs.

Inspecting the eggs means examining whether an egg has been fertilised and/or whether the embryo is viable, which for example can be done by shining an inspection lamp on the egg.

In the inspection unit 7 one side of the egg can be illuminated and the other side can have a detector that measures the quantity of light transmitted through the egg and incident on the sensitive surface of the detector.

On the basis of the measured quantity of light, it can be determined whether the egg contains a viable embryo when this quantity is less than a certain percentage of the light transmitted by the inspection lamp.

In the embodiment shown, the inspection unit 7 contains a transfer unit 8 that takes the rejected eggs from the prehatching drawer 4 and moves these eggs in a sideways direction in order to place the rejected eggs next to the conveyor belt 2 or removes them via a waste chute provided for this purpose.

In a practical variant of the invention, the device 1 has a control unit 9 that receives data from the inspection unit 7 relating to the number and/or positions of the rejected or approved eggs.

According to the invention, in the device 1 there is at least one egg placement module 10 that can take out all eggs from the prehatching drawer 4 at the same time.

In the most preferred embodiment, there are a number of these egg placement modules 10-11, downstream from the inspection unit 7.

The egg placement module 10-11 can thereby be equipped with means to move the egg placement module 10-11 in a transverse direction over a distance that is at least equal to the aforementioned distance between the egg holders 6. The aforementioned means can also move the eggs in a vertical direction.

The egg placement module 10-11 preferably has a series of suction cups 12 for picking up and placing the eggs, as shown in figure 4.

The aforementioned suction cups 12 are arranged in a regular pattern, preferably in a pattern of rows and columns with a distance between them that corresponds to the distance between the egg holders 6 in the prehatching drawer 4.

Each suction cup 12 can be made of a flexible housing 13 with a length that is variable, and preferably each suction cup 12 is separately connected to a vacuum system so that the air pressure in the space within the suction cup 12 is kept below atmospheric pressure.

In a practical embodiment, the vacuum system contains at least one vacuum chamber, whereby each suction cup 12 is connected to this vacuum chamber via one pipe that can be closed by a valve, and which can again be opened by the valve, depending on the desired action, in order to pick up or release an egg.

In the aforementioned control unit 9, there can be means to activate or deactivate the aforementioned valves.

In a practical variant of the invention, the device 1 has a transfer unit 14 that is downstream from the egg placement modules 10-11.

As this transfer unit 14 picks up and moves the approved eggs, specific measures are preferably taken to avoid damage to the eggs in this transfer unit 14.

In a practical embodiment, the transfer unit 14 also has a vacuum system with suction cups 12, somewhat similar to the pickup system of the egg placement modules 10-11.

However, the pickup system of the transfer unit 14 can be constructed much more simply because, in contrast to the pickup system in the egg placement modules one single central valve for all suction cups is sufficient. After all, all eggs are always picked up and put down in the transfer unit 14.

Although not strictly necessary for the invention, the device 1 in figures 1-2 have an egg detection unit 15 that scans the prehatching drawer 4 and reports the empty and/or filled positions in the prehatching drawer 4 to the control unit 9.

Of course these data can also be sent by the inspection unit 7 to the control unit 9, and enable the data of the egg detection unit 15 to verify the data of the inspection unit 7.

In a practical embodiment, the control unit 9 can be provided with a touchscreen, a keyboard or similar, such that the user can enter the number of eggs that have to be put in the hatching tray 5.

In addition, the control unit 9 can have a memory module or similar in order to collect data relating to the quantity and quality of the eggs from the prehatching drawers 4 or similar.

The method for inspecting and transferring eggs on the basis of the device 1 is very simple and as follows.

The prehatching drawers 4 are supplied via the first conveyor belt 2 and are at least partially filled with prehatched eggs. These prehatching drawers 4 are transported to the inspection unit 7 where they are inspected or tested.

The rejected eggs are removed in the transfer unit 8 of the inspection unit 7 from the prehatching drawer.

It is possible that the rejected eggs picked up are moved sideways and from there removed, by placing these eggs on a conveyor belt, for example, or throwing them in a chute. Irrespective of the chosen method, in principle the prehatching drawer 4 only contains approved eggs after passing through the inspection and transfer unit 7-8.

Then this first prehatching drawer 4 with approved eggs is moved to a first egg placement module 10. In this egg placement module 10, the eggs are taken out of the prehatching drawer 4 by means of a vacuum system and suction cups 12, and held above the first conveyor belt 2.

The suction cups 12 are hereby placed against the eggs, and the eggs are carefully sucked up.

Then the emptied first prehatching drawer 4 can be removed by the first conveyor belt 2.

A second prehatching drawer 4 that is also supplied by the first conveyor belt 2 goes through similar steps, albeit that the second prehatching drawer 4 with approved eggs is moved to the second egg placement module 11. In this second egg placement module 11 too, the eggs are picked up and held above the first conveyor belt 2, and the empty prehatching drawer is then taken away by the first conveyor belt 2.

A third prehatching drawer 4 supplied by the first conveyor belt 2 also goes through the steps of inspection and removal of the rejected eggs.

On the basis of the number of approved eggs in the third prehatching drawer 4 and the desired number of eggs in the hatching tray 5, the control unit 9 can calculate whether there are already sufficient eggs in the prehatching drawer 4 or whether eggs still have to be added.

When this third prehatching drawer 4 passes through the egg detection unit 15, the drawer 4 will be scanned and the empty and/or filled positions will be reported to the control unit 9.

After all, from the inspection of the first and second prehatching drawers 4, the positions of the approved eggs in the egg placement modules 10-11 are known.

On the basis of the empty positions in the third prehatching drawer 4 and the positions of the eggs in the egg placement modules 10-11, the control unit 9 will determine the number of additional eggs that have to be placed and also how many eggs from which egg placement module 10-11 have to be used for this purpose.

Preferably the algorithm in the control unit 9 not only takes into account the positions of the eggs in the egg placement modules 10-11, in order to limit the number of sideways movements as much as possible, but also the period of time in which the eggs are in the egg placement module 10-11.

When the third prehatching drawer 4 is supplied by the first conveyor belt 2 under the first egg placement module 10, a number of picked-up eggs will be lowered into the empty egg holders 6 of the prehatching drawer 4.

Because the prehatching drawer 4 is slid slowly under the egg placement module 10, it is possible to place any egg at random in a certain row of the egg placement module 10 in any arbitrary empty position of the same row of the prehatching drawer 4.

It is possible that that the egg placement module 10 makes a movement in the transverse direction in order to move an egg that is initially above a filled egg holder 6 to a position above an empty egg holder 6 in the third prehatching drawer 4, whereby the movement in the transverse direction moves the egg from one row to another.

As a result of the vacuum system, it is possible for the egg or eggs to be lowered in a controlled way so that the eggs are not damaged.

It is also possible that the control unit 9 brings the prehatching drawer 4 directly under the second egg placement module 11, if it follows from the algorithm that the prehatching drawer 4 only has to be filled with eggs from the second egg placement module 11, or if these eggs have already been in the egg placement module 11 for a long time.

After placing one or more eggs from the first and/or second egg placement module 10-11 or otherwise, the third prehatching drawer 4 is brought to below the transfer unit 14.

At the location of the transfer unit 14, the third prehatching drawer 4 will contain the desired number of eggs. This target value corresponds to the ideal number of eggs that are desired to be placed in the hatching tray 5.

The eggs are picked up via the transfer unit 14 from the prehatching drawer 4 and moved in a transverse direction to the second conveyor belt 3, on which an empty hatching tray 5 is transported.

After the eggs have been placed in the hatching tray 5 via the transfer unit 14, the filled hatching tray 5 is removed by the second conveyor belt 3 and taken to the incubator, and the emptied third prehatching drawer 4 is removed by the first conveyor belt 2.

It is clear to a man skilled in the art that if the third prehatching drawer 4 already holds enough approved eggs, the placing of additional eggs from the egg placement modules 10-11 is completely superfluous and even undesired, and in that case the prehatching drawer 4 can proceed without interim stops in the egg placement modules 10-11 to the transfer unit 14.

If both egg placement modules 10-11 still contain eggs, after the third prehatching drawer 4 a fourth prehatching drawer 4 is supplied and filled.

As soon as one of the two egg placement modules 10-11 has no more eggs, the control unit 9 will ensure that a prehatching drawer 9 with approved eggs is again taken to the egg placement module 10-11 concerned.

In the most practical variant of the invention, the priority for placing the eggs is determined, among others, by the length of time that the eggs have been in the egg placement module 10-11. When this duration threatens to exceed a certain limit, the priority for placing the egg can be increased considerably.

Although the algorithm in the control unit 9 is aimed at the eggs having to be placed within a prior maximum time limit, in exceptional cases it may happen that the eggs stay in the egg placement module 10-11 for too long, for example when many successively supplied prehatching drawers 4 contain enough eggs.

If the maximum time duration is exceeded, the control unit 9 can send a signal to the egg placement module 10-11, and it can evacuate the eggs or the egg by making a sideways movement for example and removing the eggs via a separate conveyor belt or waste chute.

It may be that when the maximum duration is exceeded, an optical or acoustic signal is generated.

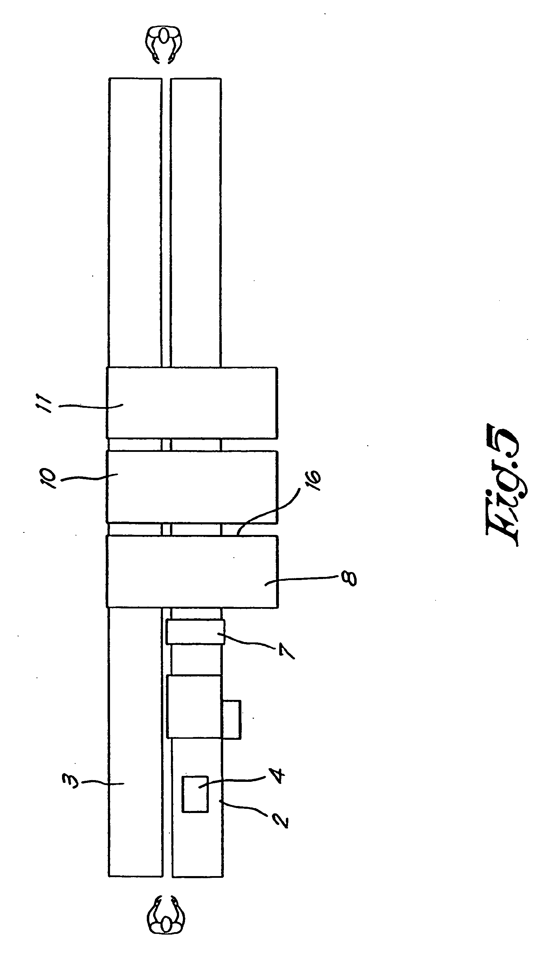

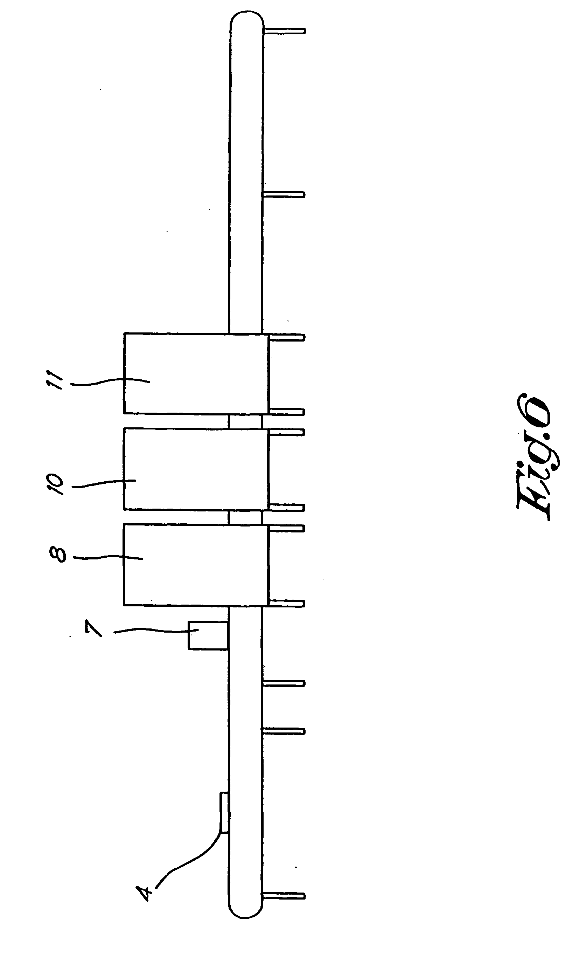

However, it is clear that the algorithm of the control unit is programmed to minimise the number of eggs that stay in the egg placement module for too long. Figures 5 and 6 show a second variant of the invention that mainly differs from the first one by the absence of the transfer unit 14 after the egg placement modules 10-11, and by the characteristic that the egg placement modules 10-11 pick up the eggs and move them to a position above the second conveyor belt.

In this embodiment, the egg placement modules 10-11 will be kept at a certain height above the second conveyor belt 3 so that a hatching tray 5 supplied by the conveyor belt 3 cannot accidentally hit the eggs.

Although figures 5 and 6 show two egg placement modules, it is of course possible that the device only contains one egg placement module or that the device contains more than two egg placement modules.

In a variant not shown, the inspection unit 7 can have two separate transfer units 8-16, whereby a first transfer unit 8 removes the rejected eggs and the second transfer unit 16 picks up the approved eggs from the prehatching drawer 4 and moves them in the transverse direction to above the second conveyor belt 3.

In the variant shown there is one transfer unit that first removes the rejected eggs, and then picks up and moves the remaining approved eggs.

The method for inspection and transferring is similar.

In the first instance one or two prehatching drawers 4 are inspected and taken to an egg placement module 10-11, where the eggs are picked up and moved in a transverse direction so that they come to the second conveyor belt 3.

Empty hatching trays 5 are supplied by the second conveyor belt 3, and at the level of the inspection unit 7 the approved eggs of the third prehatching drawer supplied will be placed in a hatching tray 5 by the transfer unit 16, whereby the valve of the suction cup concerned or the suction cup itself has a calibrated passage so that the underpressure is only gradually removed and tends towards atmospheric pressure.

If the number of eggs in the hatching tray 5 is less than the ideal number, the control unit 9 calculates how many eggs have to be added to the hatching tray 5.

If the device contains two egg placement modules 10-11, it also determines which egg placement module 10-11 the hatching tray 5 must be positioned by, and how many eggs must be added to the hatching tray 5 by each egg placement module 10-11.

In this embodiment, account is also taken of the fact that the eggs must not stay in the egg placement module 10-11 for too long.

If the egg placement module 10-11 has to place one or more eggs in the hatching tray 5, the underpressure is removed in the suction cup concerned, all such that the egg can descend relatively slowly and be carefully placed in the hatching tray, whereby to this end the valve of the suction cup concerned or the suction cup itself has a calibrated passage so that the underpressure is only gradually removed.

If an egg is placed in a position in the hatching tray 5 that is not empty, the flexibility of the suction cup 12, together with the force of gravity, will ensure that the egg to be positioned looks for a way between the eggs already present in the hatching tray 5, without the eggs being damaged by this.

In this way, after passing through one or two egg placement modules 10-11, the hatching tray will contain the set number of eggs and the first conveyor belt 2 will remove the empty prehatching drawers 4, while the second conveyor belt 3 removes the filled hatching trays 5.

Although the embodiments of the drawings suggest a manual positioning and removal of prehatching drawers 4 and hatching trays 5, it is not excluded that the prehatching drawers 4 and/or hatching trays 5 are placed or removed on the conveyor belts 2-3 concerned automatically.

Although in the foregoing description, conveyor belts are always mentioned for the supply and removal of prehatching drawers and hatching trays, it is clear that these conveyor belts can be replaced by alternative transport systems, for example in the form of continuous plastic chains in a circuit.

The present invention is by no means limited to the embodiments described as an example and shown in the drawings, but a device according to the invention for inspecting and transferring eggs and the method applied to it can be realised in all kinds of variants, without departing from the scope of the invention.

## Claims

1. Device (1) for inspecting and transferring eggs from a prehatching drawer (4) to a hatching tray (5), in which the device (1) contains two conveyor belts (2-3) that can respectively convey prehatching drawers (4) with prehatched eggs and empty hatching trays (5), whereby the device (1) contains an inspection unit (7) that has means to enable the prehatched eggs to be inspected, whereby the inspection unit (7) contains a transfer unit (8) to remove the rejected eggs from the prehatching drawer (4), **characterised in that** the device (1) contains at least one egg placement module (10-11) that can take all eggs out of a prehatching drawer (4) simultaneously and can separately place one or more of the eggs taken out.

2. Device (1) according to claim 1, **characterised in that** the device (1) contains one or more egg placement modules (10-11) that are placed downstream from the inspection unit (7).

3. Device (1) according to any one of the foregoing claims, **characterised in that** the device (1) has a control unit (9) that records the time for which an egg is in an egg placement module (10-11) and that the priority for placing the eggs is determined by taking this time into account, and that when a time limit is exceeded, the egg is evacuated and/or an acoustic signal and/or an optical signal is given.

4. Device (1) according to any one of the claims 1 to 3, **characterised in that** between the inspection unit (7) and a first egg placement module (10) there is an egg detection unit (15).

5. Device (1) according to any one of the foregoing claims, **characterised in that** the egg placement module (10-11) has a series of suction cups (12) for picking up and positioning the eggs, and that each suction cup (12) is separately connected to a vacuum system in order to apply an underpressure in the space within the suction cup.

6. Device (1) according to claim 5, **characterised in that** the vacuum system is formed by at least one vacuum chamber to which the aforementioned suction cups (12) are each connected separately via a pipe that can be closed by a valve.

7. Device (1) according to claim 5 of 6, **characterised in that** each suction cup (12) is made of a flexible housing (13) with a variable length.

8. Device (1) according to any one of the claims 5 to 7, **characterised in that** there is a control unit (9) that has means to activate and deactivate the aforementioned valves.

9. Device (1) according to any one of the foregoing claims, **characterised in that** the inspection unit (7) has a transfer unit (16) that contains means for picking up the inspected eggs from the prehatching drawer (4) and placing the eggs picked up in a hatching tray (5) on the second conveyor belt (3).

10. Device (1) according to claim 1, **characterised in that** the control unit (9) contains an algorithm that moves the eggs picked up in the egg placement module (10-11) to a position above the second conveyor belt (3).

11. Device (1) according to any one of the claims 1 to 8, **characterised in that** the device (1) contains a transfer unit (14) for picking up and positioning all eggs from the prehatching drawer (4) in a hatching tray (5).

12. Device (1) according to claim 11, **characterised in that** the aforementioned transfer unit (14) is placed downstream from the egg placement module (10-11).

13. Device (1) according to claim 11 or 12, **characterised in that** the prehatching drawer (4) has individual egg holders (6) that are positioned in rows and/or columns with a fixed distance between them, and that the egg placement module (10-11) has means to move this egg placement module (10-11) in a transverse direction over a distance that is at least equal to the aforementioned distance between the rows and/or columns.

14. Method for inspecting and transferring eggs, whereby the method makes use of a device (1) according to any one of the foregoing claims, **characterised in that** the method comprises the steps of conveying a prehatching drawer (4) at least partially filled with prehatched eggs to an inspection unit (7) one by one, the inspection of the eggs for the presence and/or viability of the embryo or chicken, and the removal of the rejected eggs from the prehatching drawer (4), taking all eggs out of a first prehatching drawer (4) in an egg placement module (10-11), and placing one or more of the eggs taken out in a second prehatching drawer (4) on the first conveyor belt (2) or in a hatching tray (5) on the second conveyor belt (3).

15. Method according to claim 14, **characterised in that** the number of eggs to be placed depends on the number of rejected and/or approved inspected eggs of the prehatching drawer (4).

16. Method according to claim 14 or 15, **characterised in that** the number of eggs to be placed depends on a target value.

17. Method according to claim 16, **characterised in that** the target value is set beforehand, or that it can be set or adjusted by the user via the control unit (9).

## Patentansprüche

1. Vorrichtung (1) zum Schieren und Umlegen von Eiern aus einer Vorbruthorde (4) zu einer Schlupfhorde (5), wobei die Vorrichtung zwei Förderbänder (2-3) umfasst, welche Vorbruthorden (4) mit vorbebrüteten Eiern beziehungsweise leere Schlupfhorden (5) befördern können, wobei die Vorrichtung (1) eine Schiereinheit (7) umfasst, die Mittel aufweist, die es ermöglichen, die vorbebrüteten Eier zu schieren, wobei die Schiereinheit (7) eine Umlegeeinheit (8) zum Entfernen der ausgemusterten Eier aus der Vorbruthorde (4) umfasst, **dadurch gekennzeichnet, dass** die Vorrichtung (1) mindestens ein Eierablegemodul (10-11) umfasst, das alle Eier aus einer Vorbruthorde (4) gleichzeitig herausnehmen und eines oder mehrere der herausgenommenen Eier getrennt ablegen kann.

2. Vorrichtung (1) nach Anspruch 1, **dadurch gekennzeichnet, dass** die Vorrichtung (1) ein oder mehrere Eierablegemodule (10-11) enthält, die stromabwärts von der Schiereinheit (7) angeordnet sind.

3. Vorrichtung (1) nach einem der vorgenannten Ansprüche, **dadurch gekennzeichnet, dass** die Vorrichtung (1) eine Steuereinheit (9) aufweist, welche den Zeitraum aufzeichnet, während dessen ein Ei sich in einem Eierablegemodul (10-11) befindet, und dass die Priorität für das Ablegen der Eier unter Berücksichtigung dieses Zeitraums festgelegt wird, und dass bei Überschreiten eines Zeitlimits das Ei evakuiert wird und/oder ein akustisches Signal und/oder ein optisches Signal gegeben wird.

4. Vorrichtung (1) nach einem der Ansprüche 1 bis 3, **dadurch gekennzeichnet, dass** sich zwischen der Schiereinheit (7) und einem ersten Eierablegemodul (10) eine Eierdetektionseinheit (15) befindet.

5. Vorrichtung (1) nach einem der vorgenannten Ansprüche, **dadurch gekennzeichnet, dass** das Eierablegemodul (10-11) eine Serie von Saugnäpfen (12) zum Aufnehmen und Ablegen der Eier aufweist und dass jeder Saugnapf (12) separat mit einem Vakuumsystem verbunden ist, um einen Unterdruck in dem Raum innerhalb des Saugnapfs anzulegen.

6. Vorrichtung (1) nach Anspruch 5, **dadurch gekennzeichnet, dass** das Vakuumsystem durch mindestens eine Vakuumkammer gebildet wird, woran die vorgenannten Saugnäpfe (12) jeder separat mittels einer Leitung, die durch ein Ventil abgeschlossen werden kann, angeschlossen sind.

7. Vorrichtung (1) nach Anspruch 5 oder 6, **dadurch gekennzeichnet, dass** jeder Saugnapf (12) aus einem flexiblen Gehäuse (13) mit variabler Länge besteht.

8. Vorrichtung (1) nach einem der Ansprüche 5 bis 7, **dadurch gekennzeichnet, dass** eine Steuereinheit (9) vorgesehen ist, die Mittel zum Aktivieren und Deaktivieren der vorgenannten Ventile aufweist.

9. Vorrichtung (1) nach einem der vorgenannten Ansprüche, **dadurch gekennzeichnet, dass** die Schiereinheit (7) eine Umlegeeinheit (16) aufweist, die Mittel zum Aufnehmen der geschierten Eier aus der Vorbruthorde (4) und Ablegen der aufgenommenen Eier in einer Schlupfhorde (5) auf dem zweiten Förderband (3) umfasst.

10. Vorrichtung (1) nach Anspruch 1, **dadurch gekennzeichnet, dass** die Steuereinheit (9) einen Algorithmus umfasst, der die aufgenommenen Eier in dem Eierablegemodul (10-11) zu einer Position über dem zweiten Förderband (3) bewegt.

11. Vorrichtung (1) nach einem der Ansprüche 1 bis 8, **dadurch gekennzeichnet, dass** die Vorrichtung (1) eine Umlegeeinheit (14) zum Aufnehmen und Ablegen aller Eier aus der Vorbruthorde (4) in einer Schlupfhorde (5) umfasst.

12. Vorrichtung (1) nach Anspruch 11, **dadurch gekennzeichnet, dass** die vorgenannte Umlegeeinheit (14) stromabwärts von dem Eierablegemodul (10-11) angeordnet ist.

13. Vorrichtung (1) nach Anspruch 11 oder 12, **dadurch gekennzeichnet, dass** die Vorbruthorde (4) individuelle Eierhalter (6) aufweist, die in Reihen und/oder Spalten mit einem festen Zwischenabstand positioniert sind, und dass das Eierablegemodul (10-11) Mittel aufweist, um dieses Eierablegemodul (10-11) in einer Querrichtung über einen Abstand zu bewegen, der mindestens gleich dem vorgenannten Abstand zwischen den Reihen und/oder Spalten ist.

14. Verfahren zum Schieren und Umlegen von Eiern, wobei das Verfahren von einer Vorrichtung (1) gemäß einem der vorgenannten Ansprüche Gebrauch macht, **dadurch gekennzeichnet, dass** das Verfahren die Schritte des nacheinander Beförderns einer Vorbruthorde (4), die mindestens teilweise mit vorbebrüteten Eiern gefüllt ist, zu einer Schiereinheit (7), des Schierens der Eier auf die Anwesenheit und/oder Lebensfähigkeit des Embryos oder Kükens, und des Entfernens der ausgemusterten Eier aus der Vorbruthorde (4), des Aufnehmens aller Eier aus einer ersten Vorbruthorde (4) in ein Eierablegemodul (10-11) und Ablegens eines oder mehr der aufgenommenen Eier in einer zweiten Vorbruthorde (4) auf dem ersten Förderband (2) oder in einer Schlupfhorde (5) auf dem zweiten Förderband (3) umfasst.

15. Verfahren nach Anspruch 14, **dadurch gekennzeichnet, dass** die Anzahl abzulegender Eier von der Anzahl der ausgemusterten und/oder akzeptierten geschierten Eier der Vorbruthorde (4) abhängig ist.

16. Verfahren nach Anspruch 14 oder 15, **dadurch gekennzeichnet, dass** die Anzahl abzulegender Eier von einem Zielwert abhängig ist.

17. Verfahren nach Anspruch 16, **dadurch gekennzeichnet, dass** der Zielwert im Voraus eingestellt wird oder dass er durch den Benutzer mittels der Steuereinheit (9) eingestellt oder angepasst werden kann.

## Revendications

1. Dispositif (1) pour l'inspection et le transfert d'oeufs d'un tiroir à prééclosion (4) à un tiroir à éclosion (5), dans lequel le dispositif (1) contient deux courroies transporteuses (2-3) qui peuvent transporter respectivement des tiroirs à prééclosion (4) comprenant des oeufs au stade de prééclosion et des tiroirs à éclosion vides (5), le dispositif (1) contenant une unité d'inspection (7) qui possède des moyens pour pouvoir inspecter les oeufs au stade de prééclosion, l'unité d'inspection (7) contenant une unité de transfert (8) permettant de retirer les oeufs rejetés du tiroir à prééclosion (4), **caractérisé en ce que** le dispositif (1) contient au moins un module de placement d'oeufs (10-11) qui peut prélever tous les oeufs d'un tiroir à prééclosion (4) de manière simultanée et qui peut placer séparément un ou plusieurs des oeufs prélevés.

2. Dispositif (1) selon la revendication 1, **caractérisé en ce que** le dispositif (1) contient un ou plusieurs modules de placement d'oeufs (10-11) qui sont disposés en aval par rapport à l'unité d'inspection (7).

3. Dispositif (1) selon l'une quelconque des revendications précédentes, **caractérisé en ce que** le dispositif (1) possède une unité de commande (9) qui enregistre le moment correspondant à la présence d'un oeuf dans un module de placement d'oeufs (10-11) et **en ce que** la priorité pour le placement des oeufs est déterminée en prenant en compte ce moment, et **en ce que**, lorsqu'une limite de temps est dépassée, l'oeuf est évacué et/ou un signal acoustique et/ou un signal optique est donné.

4. Dispositif (1) selon l'une quelconque des revendications 1 à 3, **caractérisé en ce qu'**on prévoit, entre l'unité d'inspection (7) et un premier module de placement d'oeufs (10), une unité de détection d'oeufs (15).

5. Dispositif (1) selon l'une quelconque des revendications précédentes, **caractérisé en ce que** le module de placement d'oeufs (10-11) possède une série de ventouses (12) pour le prélèvement et pour le positionnement des oeufs, et **en ce que** chaque ventouse (12) est reliée de manière séparée à un système de vide afin d'appliquer une sous-pression dans l'espace régnant dans la ventouse.

6. Dispositif (1) selon la revendication 5, **caractérisé en ce que** le système de vide est réalisé à l'aide d'au moins une chambre à vide à laquelle sont raccordées séparément les ventouses susmentionnées (12) via un tuyau qui peut être fermé par une valve.

7. Dispositif (1) selon la revendication 5 ou 6, **caractérisé en ce que** chaque ventouse (12) est réalisée sous la forme d'un logement flexible (13) possédant une longueur variable.

8. Dispositif (1) selon l'une quelconque des revendications 5 à 7, **caractérisé en ce qu'**on prévoit une unité de commande (9) qui possède des moyens pour activer et pour désactiver les valves susmentionnées.

9. Dispositif (1) selon l'une quelconque des revendications précédentes, **caractérisé en ce que** l'unité d'inspection (7) possède une unité de transfert (16) qui contient des moyens pour prélever les oeufs inspectés à partir du tiroir à prééclosion (4) et pour placer les oeufs prélevés dans un tiroir à éclosion (5) sur la deuxième courroie transporteuse (3).

10. Dispositif (1) selon la revendication 1, **caractérisé en ce que** l'unité de commande (9) contient un algorithme qui déplace les oeufs prélevés dans le module de placement d'oeufs (10-11) jusqu'à un endroit situé au-dessus de la deuxième courroie transporteuse (3).

11. Dispositif (1) selon l'une quelconque des revendications 1 à 8, **caractérisé en ce que** le dispositif (1) contient une unité de transfert (14) pour le prélèvement et le positionnement de la totalité des oeufs depuis le tiroir à prééclosion (4) jusque dans un tiroir à éclosion (5).

12. Dispositif (1) selon la revendication 11, **caractérisé en ce que** l'unité de transfert susmentionnée (14) est disposée en aval par rapport au module de placement d'oeufs (10-11).

13. Dispositif (1) selon la revendication 11 ou 12, **caractérisé en ce que** le tiroir à prééclosion (4) possède des dispositifs de support d'oeufs individuels (6) qui sont disposés en rangs et/ou en colonnes avec une distance fixe entre eux, et **en ce que** le module de placement d'oeufs (10-11) possède des moyens pour déplacer ce module de placement d'oeufs (10-11) dans une direction transversale sur une distance qui est au moins égale à la distance susmentionnée séparant les rangées et/ou les colonnes.

14. Procédé pour l'inspection et le transfert d'oeufs, le procédé faisant usage d'un dispositif (1) selon l'une quelconque des revendications précédentes, **caractérisé en ce que** le procédé comprend les étapes consistant à : transporter un tiroir à prééclosion (4) au moins rempli en partie avec des oeufs au stade de prééclosion à une unité d'inspection (7), un par un ; inspecter les oeufs quant à la présence et/ou la viabilité de l'embryon ou du poulet et éliminer les oeufs rejetés à partir du tiroir prééclosion (4) ; prélever la totalité des oeufs à partir d'un premier tiroir à prééclosion (4) dans un module de placement d'oeufs (10-11) ; et placer un ou plusieurs des oeufs prélevés dans un deuxième tiroir à prééclosion (4) sur la première courroie transporteuse (2) ou dans un tiroir à éclosion (5) sur la deuxième courroie transporteuse (3).

15. Procédé selon la revendication 14, **caractérisé en ce que** le nombre d'oeufs à placer dépend du nombre des oeufs rejetés et/ou approuvés après inspection, du tiroir à prééclosion (4).

16. Procédé selon la revendication 14 ou 15, **caractérisé en ce que** le nombre d'oeufs à placer dépend d'une valeur cible.

17. Procédé selon la revendication 1 G, **caractérisé en ce que** la valeur cible est réglée à l'avance ou bien **en ce qu'**elle peut être réglée ou adaptée par l'utilisateur via l'unité de commande (9).
